# EUROPEAN PATENT APPLICATION

(11) **EP 4 206 031 A1**
(43) Date of publication of application: **05.07.2023**
(21) Application number: 20956115.8
(22) Date of filing: 24.12.2020
(51) Int. Cl.: B60L 53/80, B60L 50/61, B60K 6/20

(54) **BATTERY SWAP TYPE HYBRID POWER VEHICLE**

(30) Priority: 30.09.2020 CN 202011066323
(71) Applicant: Zhejiang Geely Holding Group Co., Ltd., Hangzhou, Zhejiang 310051 (CN)
(72) Inventor: LI, Shufu, Hangzhou, Zhejiang 310051 (CN)
(74) Representative: Ziebig Hengelhaupt Intellectual Property Attorneys Patentanwaltsanwaltskanzlei PartGmbB
(86) International application number: PCT/CN2020/139100
(87) International publication number: WO 2022/068099

(57) **Abstract**

A battery swap type hybrid power vehicle (100). The hybrid power vehicle (100) comprises a range extending type driving system consisting of a range extender (10) and a driving motor (31), and further comprises a quick-swap battery (20) which can be quickly disassembled and swapped in a battery swap station. The quick-swap battery (20) is connected to the driving motor (31) to form a battery swap type driving system. The battery swap type driving system and the range extending type driving system can be quickly switched and independently serve as a main power system. The range extending type driving system taking the range extender (10) as a power source and/or the battery swap type driving system taking the quick-swap battery (20) as the power source can be freely and flexibly switched according to a use scene and economy to drive the vehicle to travel.

## Description

### FIELD OF THE INVENTION

The present invention relates to the field of vehicle technologies, and particularly to a battery swap type hybrid power vehicle.

### BACKGROUND OF THE INVENTION

Under dual pressure of energy conservation and emission reduction, a development of new energy automobiles becomes a necessary choice in the international society. An electric automobile is a product with a great prospect in new energy automobiles. However, since the current electric automobile has a short mileage, a consumer has mileage anxiety, which reduces willingness of the consumer to purchase the electric automobile to some extent.

To solve the mileage anxiety problem, the following three solutions are mainly adopted at present: the first solution is a battery swap type automobile. A detachable power battery is adopted in the battery swap type automobile, and the power battery can be rapidly disassembled and swapped through a battery swap station, so as to guarantee an endurance mileage. However, this solution has problems that a layout of the battery swap stations is insufficient at present, and the battery is inconvenient to swap. The second solution is a range extending type electric automobile. In the range extending type electric automobile, a fuel oil engine or a small engine of another type is adopted to drive an electric generator to generate electricity, so as to supplement electric power for a power battery of the electric automobile, thereby increasing the mileage. However, this solution mainly depends on fuel oil supply, and tends to cause problems, such as oil price fluctuation anxiety of users, or the like. The third solution is an electric automobile in which a detachable swap battery is used as a main driving means and direct driving of the automobile by a fuel oil engine serves as an auxiliary driving means. However, in this solution, the fuel oil engine is only used as the auxiliary driving means, and this solution is still limited by the layout of the battery swap stations and a battery swap convenience degree.

### BRIEF DESCRIPTION OF THE INVENTION

In view of the above problems, there is provided a battery swap type hybrid power vehicle which overcomes or at least partially solves the above problems.

An object of the present invention is to provide a battery swap type hybrid power vehicle which incorporates a range extending type technology and a battery swap technology and is capable of flexibly switching between the two technologies as a main power source.

A further object of the present invention is to further improve use flexibility of the battery swap type hybrid power vehicle in different scenes by arranging double batteries: a basic battery and a quick-swap battery.

In particular, according to one aspect of an embodiment of the present invention, there is provided a battery swap type hybrid power vehicle, including a range extending type driving system formed of a range extender and a driving motor, and further including a quick-swap battery which can be quickly disassembled and swapped in a battery swap station; wherein the quick-swap battery is connected to the driving motor to form a battery swap type driving system; and the battery swap type driving system and the range extending type driving system can be quickly switched and independently serve as a main power system.

Optionally, the range extending type driving system further includes a basic battery; the basic battery is connected with the range extender and the driving motor.

Optionally, the basic battery and the quick-swap battery of the vehicle are arranged in pairs in the following manner:
the basic battery is provided on the vehicle, and the quick-swap battery is provided in the battery swap station for circulation and charging; or
the quick-swap battery is provided on the vehicle, and the basic battery is provided in the battery swap station for circulation and charging.

Optionally, the vehicle further includes an inverter.

Optionally, a capacity of the quick-swap battery is less than 2 times a total amount of available electric energy of the range extender.

Optionally, the capacity of the quick-swap battery is equal to the total amount of available electric energy of the range extender.

Optionally, the basic battery has a capacity of 1-1.47kwh or 1.47-5.5kwh.

Optionally, the range extending type driving system further includes a fuel tank, and fuel in the fuel tank includes gasoline, diesel, methanol, ethanol, biofuel, natural gas or hydrogen.

Optionally, the vehicle further includes a transmission mechanism and a driving shaft, the driving motor is connected to the driving shaft through the transmission mechanism, and the driving shaft is connected to a wheel of the vehicle.

Optionally, the vehicle is further provided with a quick-swap device, one end of the quick-swap device is connected with a lower vehicle body of the vehicle, and the other end of the quick-swap device is connected with the basic battery or the quick-swap battery.

The battery swap type hybrid power vehicle according to the embodiment of the present invention includes the range extending type driving system formed of the range extender and the driving motor, as well as the battery swap type driving system formed of the quick-swap battery and the driving motor, and the quick-swap battery can be quickly disassembled and swapped in the battery swap station. Since the battery swap type driving system and the range extending type driving system can be quickly switched and independently serve as a main power system, the range extending type driving system taking the range extender as a power source and/or the battery swap type driving system taking the quick-swap battery as the power source can be freely and flexibly switched according to a use scene and economy to drive the vehicle to travel.

Further, the range extending type driving system of the hybrid power vehicle according to the present invention further includes the basic battery. By arranging the double batteries of the basic battery and the quick-swap battery, switching and use of the range extending type driving system and the battery swap type driving system are more diversified, thus further improving the use flexibility of the battery swap type hybrid power vehicle in different scenes.

The foregoing description merely briefly describes the technical solution of the present invention. To more clearly understand the technical means of the present invention, to allow the technical means of the present invention to be implemented according to content of the specification, and to make the foregoing and other objectives, features, and advantages of the present invention more comprehensible, particular embodiments of the present invention are described below.

According to the following detailed description of specific embodiments of the present invention in conjunction with drawings, those skilled in the art will better understand the aforementioned and other objects, advantages and features of the present invention.

### BRIEF DESCRIPTION OF THE DRAWINGS

Some specific embodiments of the present invention will be described below in detail in an exemplary rather than restrictive manner with reference to the drawings. Identical reference numerals in the drawings represent identical or similar components or parts. Those skilled in the art should understand that these drawings are not necessarily drawn to scale. In the drawings:
Fig. 1 shows a schematic structural diagram of a battery swap type hybrid power vehicle according to an embodiment of the present invention;
Fig. 2 shows a schematic structural diagram of a battery swap type hybrid power vehicle according to another embodiment of the present invention;
Fig. 3 shows a schematic structural diagram of a battery swap type hybrid power vehicle according to still another embodiment of the present invention;
Fig. 4 shows a schematic structural diagram of a battery swap type hybrid power vehicle according to yet another embodiment of the present invention;
Fig. 5 shows a schematic sectional diagram of a quick-swap device in a locked state in an embodiment of the present invention; and
Fig. 6 shows a schematic sectional diagram of a quick-swap device in an unlocked state in an embodiment of the present invention.

### DETAILED DESCRIPTION

Exemplary embodiments of the present disclosure will be described in more detail below with reference to the accompanying drawings. While exemplary embodiments of the present disclosure are shown in the drawings, it should be understood that the present disclosure may be embodied in various forms and should not be limited by the embodiments set forth herein. Rather, these embodiments are provided such that this disclosure will be thoroughly understood, and will fully convey the scope of the disclosure to those skilled in the art.

In order to solve or partially solve the above technical problems, an embodiment of the present invention provides a battery swap type hybrid power vehicle.

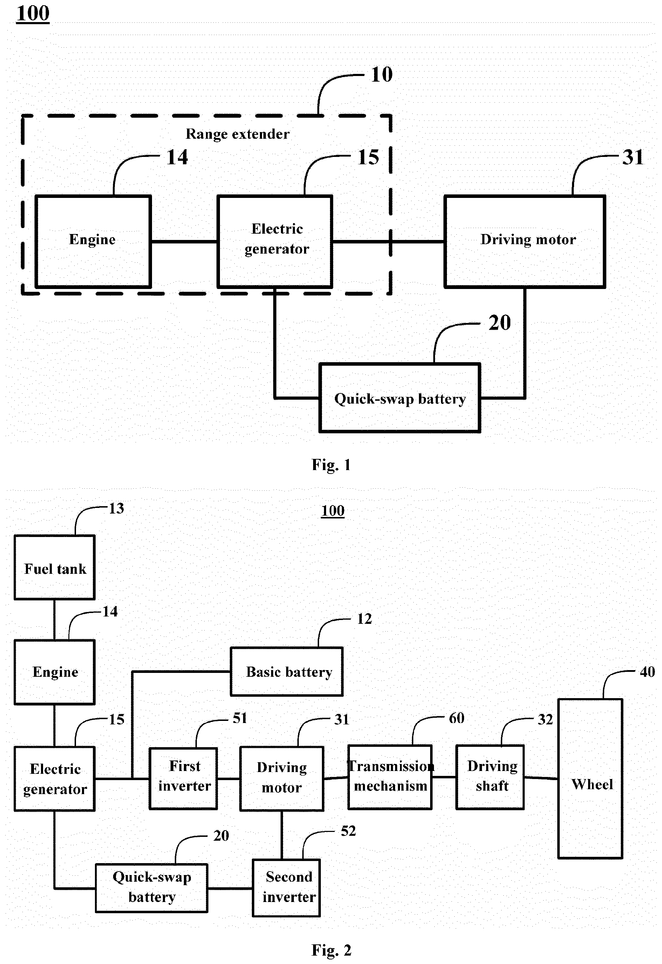

Fig. 1 shows a schematic structural diagram of a battery swap type hybrid power vehicle 100 according to an embodiment of the present invention. Referring to Fig. 1, the battery swap type hybrid power vehicle 100 may at least include a range extending type driving system formed of a range extender 10 and a driving motor 31, as well as a quick-swap battery 20. The range extender 10 is formed of an engine 14 and an electric generator 15. The range extender 10 may be connected to the driving motor 31, and the electric generator 15 generates electricity under driving of power output from the engine 14, so as to supply electric energy to the driving motor 31. The quick-swap battery 20 can be quickly disassembled and swapped in a battery swap station, so as to quickly supplement electric energy. In practical applications, for example, after a power-poor quick-swap battery 20 is disassembled by a battery swap tool, a fully-charged quick-swap battery 20 is mounted in the hybrid power vehicle 100 to swap the quick-swap battery 20. The quick-swap battery 20 is connected to the driving motor 31 to form a battery swap type driving system. The range extender 10 and the quick-swap battery 20 can supply electric energy to the driving motor 31 independently of each other; that is, either one of the range extender 10 and the quick-swap battery 20 can supply electric energy to the driving motor 31 alone in a situation where the other does not work and cannot supply electric energy, and therefore, the battery swap type driving system 1 and the range extending type driving system 2 can be switched quickly and individually serve as a main power system of the battery swap type hybrid power vehicle 100. The quick-swap battery 20 may also be connected to the range extender 10 (specifically, to the electric generator 15), so as to receive and store excess electric energy when the range extender 10 works.

The battery swap type hybrid power vehicle 100 according to the embodiment of the present invention includes the range extending type driving system formed of the range extender 10 and the driving motor 31, as well as the battery swap type driving system formed of the quick-swap battery 20 and the driving motor 31, and the quick-swap battery 20 can be quickly disassembled and swapped in the battery swap station. Since the battery swap type driving system and the range extending type driving system can be quickly switched and independently serve as a main power system, the range extending type driving system taking the range extender 10 as a power source and/or the battery swap type driving system taking the quick-swap battery 20 as the power source can be freely and flexibly switched according to a use scene and economy to drive the vehicle to travel.

Specifically, for example, for a non-long-distance driving scene (such as driving in an urban area), when a price (such as oil price) of fuel used by the range extender 10 is low, the range extender 10 is used to supply electric energy to the driving motor 31, and when an electricity price is relatively low, the quick-swap battery 20 is used and swapped in the battery swap station for use, so as to guarantee electric energy supply to the driving motor 31. For a long-distance driving scene, fuel can be fully loaded to ensure that fuel supply of the range extender 10 is sufficient, and meanwhile, the quick-swap battery 20 can be swapped in the battery swap station for use, so as to obtain a maximum endurance mileage.

Referring to Fig. 2, in one embodiment of the present invention, the range extending type driving system may further include a basic battery 12. The basic battery 12 is connected to the range extender 10 (specifically, to the electric generator 15) and the driving motor 31. The basic battery 12 may be, for example, a conventional power battery. By arranging the double batteries of the basic battery 12 and the quick-swap battery 20, a plurality of different arrangements of the basic battery 12 and the quick-swap battery 20 can be adopted, such that switching and use of the range extending type driving system and the battery swap type driving system are more diversified, thus further improving the use flexibility of the battery swap type hybrid power vehicle 100 in different scenes. The different arrangements of the basic battery 12 and the quick-swap battery 20 will be described below.

In one embodiment, the basic battery 12 and the quick-swap battery 20 are provided on the vehicle 100 at the same time. The basic battery 12 is fixed on the vehicle 100, and the quick-swap battery 20 is provided on the vehicle 100 in a quickly detachable and replaceable mode.

In this case, when the vehicle 100 is powered by the range extending type driving system, the driving motor 31 is supplied with electric energy from the basic battery 12 when the basic battery 12 is sufficiently charged. When the basic battery 12 is short of charge, the engine 14 starts to operate, and charges the basic battery 12 while supplying electric energy to the driving motor 31 through the electric generator 15. If the vehicle 100 encounters high load conditions, such as an upslope, rapid acceleration, or the like, the range extender 10 and the basic battery 12 simultaneously supply electric energy to the driving motor 31. During conditions, such as a downslope, sliding, or the like, the driving motor 31 can be used as an electric generator to charge the basic battery 12, so as to achieve a function of recovering kinetic energy. When the vehicle 100 is powered by the battery swap type driving system, the quick-swap battery 20 directly supplies electric energy to the driving motor 31. In the present embodiment, the range extender 10 and the quick-swap battery 20 can be quite conveniently switched and used as a power source according to the fuel price and the electricity price in the non-long-distance driving scene, and meanwhile, the maximum endurance mileage in the long-distance driving scene can be guaranteed.

In another embodiment, the basic battery 12 and the quick-swap battery 20 are provided on the vehicle 100 at the same time, where the basic battery 12 is provided on the vehicle 100 in a quickly detachable and replaceable mode, and the quick-swap battery 20 is also provided on the vehicle 100 in a quickly detachable and replaceable mode. In this case, the basic battery 12 and the quick-swap battery 20 can be detached or swapped in the battery swap station, such that this embodiment can reduce fuel consumption to the greatest extent, and is quite suitable for use requirements when the fuel price is high and the electricity price is low. In addition, the maximum endurance mileage of the vehicle 100 is also increased to some extent.

In still another embodiment, the basic battery 12 and the quick-swap battery 20 of the vehicle 100 may be arranged in pairs in the following manner: when one of the basic battery 12 and the quick-swap battery 20 is provided on the vehicle 100, the other is provided in the battery swap station for circulation and charging. Specifically, there exist the following two situations.

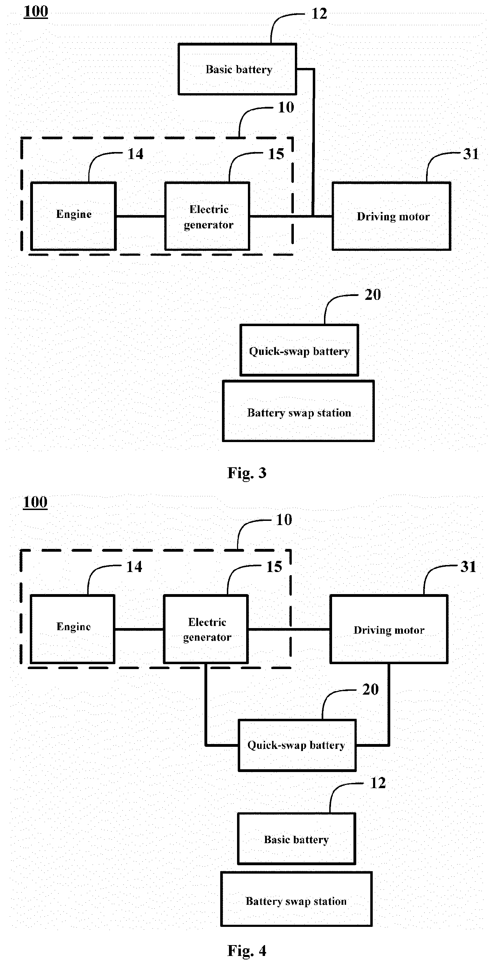

First situation: referring to Fig. 3, the basic battery 12 is provided on the vehicle 100, and the quick-swap battery 20 is provided in the battery swap station for circulation and charging. This situation is particularly suitable for a use scene when the fuel price is low and the requirement for the endurance mileage is low (such as driving in the urban area), and at this point, the quick-swap battery 20 is disassembled and placed to the battery swap station for operation, such that on the one hand, an overall weight of the vehicle 100 is reduced, and on the other hand, an operation time of the quick-swap battery 20 is increased, and a use efficiency of the quick-swap battery 20 is improved.

Second situation: referring to Fig. 4, the quick-swap battery 20 is provided on the vehicle 100, and the basic battery 12 is provided in the battery swap station for circulation and charging. This situation is particularly suitable for the use scene where the fuel price is high, a certain endurance mileage is required and a layout of the battery swap stations is sufficient. At this point, the basic battery 12 is dismounted and placed to the battery swap station for operation, such that the overall weight of the vehicle 100 is reduced to a certain extent, thereby improving an energy utilization efficiency of the quick-swap battery 20.

With continued reference to Fig. 2, in one embodiment of the present invention, the range extending type driving system may further include a fuel tank 13. The fuel tank 13 is connected to the engine 14 of the range extender 10 and configured to supply the engine 14 with fuel.

In practical applications, the fuel stored in the fuel tank 13 depends on the type of the engine 14 of the range extender 10. Generally, the fuel in the fuel tank 13 may include gasoline, diesel, methanol, ethanol, biofuel, natural gas, hydrogen, or the like. Correspondingly, the engine 14 may be a gasoline engine, a diesel engine, a methanol engine, or the like.

To further enhance the use flexibility of the quick-swap battery 20, in some embodiments, the quick-swap battery 20 may be designed to have various capacities and weights. Through the design, the quick-swap batteries 20 with different capacities and weights can be swapped and used according to actual application requirements under different use scenes, so as to maximize the energy efficiency and economy. For example, during long-distance driving, the fuel tank 13 can be filled with fuel, and meanwhile, a high-capacity quick-swap battery 20 can be mounted on the vehicle for use through the battery swap station, so as to obtain a larger endurance mileage. When the vehicle is driven in the urban area and the layout of the battery swap stations in the urban area is sufficient, a quick-swap battery 20 with a small capacity and a small weight can be mounted on the vehicle for use through the battery swap station, so as to reduce a no-load weight.

In one embodiment of the present invention, the capacity of the quick-swap battery 20 may be less than 2 times a total amount of available electric energy of the range extender 10. The total amount of the available electric energy of the range extender 10 refers to the maximum total amount of electric energy which can be supplied by the range extender 10 when the fuel tank 13 is full of fuel. Such an arrangement makes the electric energy provided by the range extender 10 close to that of the quick-swap battery 20, and breaks through a design that the range extender is usually only used as a secondary auxiliary power source in the prior art, such that the quick-swap battery 20 and the range extender 10 can be mutually backed up and independently used as a main power source.

Preferably, the capacity of the quick-swap battery 20 may be greater than 0.5 times and less than 2 times the total amount of the available electric energy of the range extender 10. More preferably, the capacity of the quick-swap battery 20 is 0.5 to 1.5 times the total amount of the available electric energy of the range extender 10. Even more preferably, the capacity of the quick-swap battery 20 is 1 time the total amount of the available electric energy of the range extender 10; that is, the capacity of the quick-swap battery 20 is equal to the total amount of the available electric energy of the range extender 10. By such a design, the range extender 10 can no longer be used only as an auxiliary power energy system, and the switching between the range extender 10 and the quick-swap battery 20 in use is more flexible and freer.

In some embodiments, the capacity of the basic battery 12 may be in the range of 1-1.47kwh. In this case, since the capacity of the basic battery 12 is much less than the capacity (generally, 15-60kwh) of the conventional power battery used in the hybrid power vehicle, and correspondingly, the weight of the basic battery 12 is greatly reduced compared with the weight of the conventional power battery, on the one hand, the weight of the whole vehicle can be effectively reduced, and the energy utilization efficiency can be improved, and on the other hand, an external charging function is not required to be considered for the small-capacity basic battery 12, which is beneficial to cost control and layout selection.

In other embodiments, the capacity of the basic battery 12 may be in the range of 1.47-5.5kwh. In this case, the capacity (i.e., energy density) of the basic battery 12 is appropriately increased, and the endurance mileage of the hybrid power vehicle 100 is increased to some extent, but meanwhile, the capacity of the basic battery 12 is still much less than the capacity of the power battery conventionally used in the hybrid power vehicle, thus achieving better balance between the battery capacity and the entire vehicle weight.

With continued reference to Fig. 2, in one embodiment of the present invention, the vehicle 100 may further include an inverter. Specifically, the inverter may include a first inverter 51 provided between the basic battery 12 and the driving motor 31 and between the electric generator 15 and the driving motor 31, and a second inverter 52 provided between the quick-swap battery 20 and the driving motor 31. Functions of the inverter herein should be well known to those skilled in the art and will not be repeated herein.

In one embodiment of the present invention, the vehicle 100 may further include a transmission mechanism 60 and a driving shaft 32. The driving shaft 32 is connected to a wheel 40 of the vehicle 100. In the present invention, the transmission mechanism 60 may be provided between the driving motor 31 and the driving shaft 32; that is, the driving motor 31 is connected to the driving shaft 31 through the transmission mechanism 60, and a driving force generated by the driving motor 31 is transmitted to the driving shaft 32 through the transmission mechanism 60 to drive the wheel 40 to rotate.

In one embodiment of the present invention, a quick-swap device 70 may be further provided on the vehicle 100. One end of the quick-swap device 70 may be connected with a lower vehicle body of the vehicle 100, and the other end of the quick-swap device is connected with the basic battery 12 or the quick-swap battery 20. The quick-swap device 70 can be configured to quickly dismount and mount the basic battery 12 or the quick-swap battery 20.

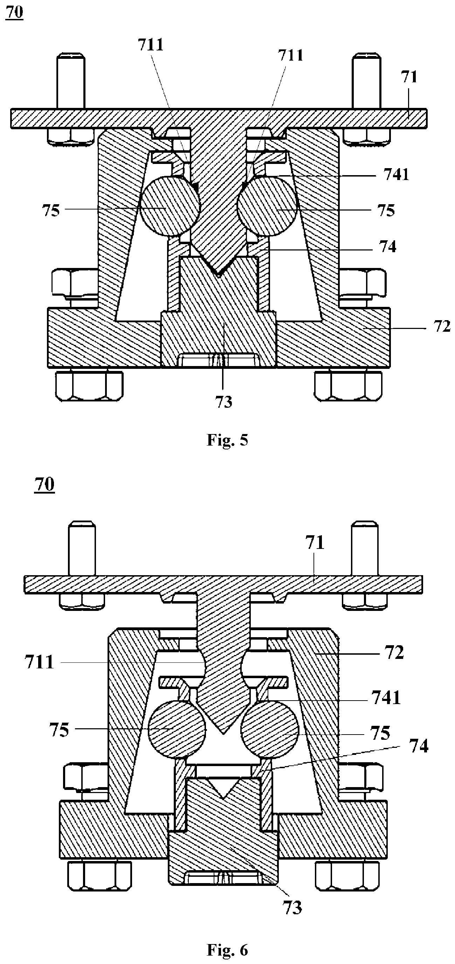

Referring to Figs. 5 and 6, in a specific implementation, the quick-swap device 70 may include a limiting pin shaft 71, a housing 72, a bolt 73, a support rod 74, and a limiting ball 75. One end of the limiting pin shaft 71 is connected with the lower vehicle body of the vehicle 100. The housing 72 is connected to the basic battery 12 or the quick-swap battery 20 and has a cavity with a trapezoidal structure therein. Specifically, the housing 72 is located at an edge of the basic battery 12 or the quick-swap battery 20, and the housing 72 and the basic battery 12 or the quick-swap battery 20 are connected by bolts at left and right sides of a lower portion of the housing 72. The bolt 73 is located at a lower portion of the cavity, extends into the cavity, and is in threaded connection to the housing 72. The support rod 74 is located in the cavity and supported in the cavity by the bolt 73 and is able to move up and down with the bolt 73 relative to the housing 72. The limiting ball 75 is located in a middle portion of the support rod 74. A middle portion of the limiting pin shaft 71 has a recess 711 depressed toward an axial direction thereof, the support rod 74 is hollow and has a notch 741 at a position corresponding to the recess 711, and the limiting ball 75 is matched with the notch 741. When the quick-swap device 70 is in a locked state, the limiting pin shaft 71 is inserted into the support rod 74, and the limiting ball 75 is caught in the recess 711.

When the basic battery 12 or the quick-swap battery 20 is required to be mounted on the vehicle 100, the limiting pin shaft 71 is separated from the housing 72, a jacking mechanism conveys the basic battery 12 or the quick-swap battery 20 to a position of a lower portion of a vehicle body close to the limiting pin shaft 71, and at this point, the limiting pin shaft 71 is inserted into the housing 72, but the recess 711 on the limiting pin shaft 71 and the limiting ball 75 are not on the same horizontal plane; that is, the limiting ball 75 is not caught in the recess 711, and the limiting ball 75 is located in the notch 741 on the support rod 74. Therefore, if the basic battery 12 or the quick-swap battery 20 is required to be mounted on the vehicle 100, the bolt 73 is required to drive the support rod 74 and the limiting ball 75 to move upwards relative to the housing 72 together until the limiting ball 75 is caught in the recess 711. In this way, by catching the limiting ball 75 in the recess 711, the quick-swap device 70 is in the locked state (as shown in Fig. 5), and thus, the basic battery 12 or the quick-swap battery 20 is mounted on the vehicle 100.

When the basic battery 12 or the quick-swap battery 20 is required to be dismounted, the jacking mechanism slightly jacks up the basic battery 12 or the quick-swap battery 20, and at this point, a motor moves the bolt 73 downwards relative to the housing 72 to form an unlocked state (as shown in Fig. 6). Here, when the jacking mechanism slightly jacks up the basic battery 12 or the quick-swap battery 20, the limiting ball 75 is released from a force applied state, such that the bolt 73 can be driven by the motor to move downwards, and the support rod 74 also releases the upward jacking force of the bolt 73 to move downwards until the limiting ball 75 moves out of the recess 711. At this point, the basic battery 12 or the quick-swap battery 20 falls on the jacking mechanism, and the process of dismounting the basic battery 12 or the quick-swap battery 20 is completed.

The quick-swap device 70 in the present embodiment can simply and quickly realize locking and unlocking, and thus improves mounting and dismounting efficiencies of the battery.

It should be noted that the above description is only one implementation of the quick-swap device 70 in the present invention. Certainly, the quick-swap device 70 may have other implementations, and the present invention is not limited thereto.

According to any one or a combination of plural optional embodiments, the embodiments of the present invention can achieve the following beneficial effects.

The battery swap type hybrid power vehicle according to the embodiment of the present invention includes the range extending type driving system formed of the range extender and the driving motor, as well as the battery swap type driving system formed of the quick-swap battery and the driving motor, and the quick-swap battery can be quickly disassembled and swapped in the battery swap station. Since the battery swap type driving system and the range extending type driving system can be quickly switched and independently serve as a main power system, the range extending type driving system taking the range extender as a power source and/or the battery swap type driving system taking the quick-swap battery as the power source can be freely and flexibly switched according to a use scene and economy to drive the vehicle to travel.

Further, the range extending type driving system of the hybrid power vehicle according to the present invention further includes the basic battery. By arranging the double batteries of the basic battery and the quick-swap battery, switching and use of the range extending type driving system and the battery swap type driving system are more diversified, thus further improving the use flexibility of the battery swap type hybrid power vehicle in different scenes.

In the description provided herein, numerous specific details are set forth. However, it can be understood that the embodiments of the present invention may be practiced without these specific details. In some instances, well-known methods, structures and technology are not shown in detail, in order not to obscure an understanding of this description.

Finally, it should be noted that the above embodiments are only used to illustrate the technical solutions of the present invention, not to limit the present invention; although the present invention is described in detail with reference to the above embodiments, those having ordinary skill in the art should understand that, within the spirit and principle of the present invention, they still can modify technical solutions recited in the aforesaid embodiments or equivalently replace partial or all technical features therein; these modifications or substitutions do not make corresponding technical solutions depart from the protection scope of the present invention.

## Claims

1. A battery swap type hybrid power vehicle, comprising a range extending type driving system formed of a range extender and a driving motor, and further comprising a quick-swap battery which can be quickly disassembled and swapped in a battery swap station; wherein the quick-swap battery is connected to the driving motor to form a battery swap type driving system; and the battery swap type driving system and the range extending type driving system can be quickly switched and independently serve as a main power system.

2. The battery swap type hybrid power vehicle according to claim 1, wherein the range extending type driving system further comprises a basic battery; the basic battery is connected with the range extender and the driving motor.

3. The battery swap type hybrid power vehicle according to claim 2, wherein the basic battery and the quick-swap battery of the vehicle are arranged in pairs in the following manner:
the basic battery is provided on the vehicle, and the quick-swap battery is provided in the battery swap station for circulation and charging; or
the quick-swap battery is provided on the vehicle, and the basic battery is provided in the battery swap station for circulation and charging.

4. The battery swap type hybrid power vehicle according to any one of claims 1 to 3, further comprising an inverter.

5. The battery swap type hybrid power vehicle according to claim 1, wherein
a capacity of the quick-swap battery is less than 2 times a total amount of available electric energy of the range extender.

6. The battery swap type hybrid power vehicle according to claim 5, wherein
the capacity of the quick-swap battery is equal to the total amount of available electric energy of the range extender.

7. The battery swap type hybrid power vehicle according to claim 2, wherein
the basic battery has a capacity of 1-1.47kwh or 1.47-5.5kwh.

8. The battery swap type hybrid power vehicle according to claim 1, wherein the range extending type driving system further comprises a fuel tank, and fuel in the fuel tank comprises gasoline, diesel, methanol, ethanol, biofuel, natural gas or hydrogen.

9. The battery swap type hybrid power vehicle according to claim 1, further comprising a transmission mechanism and a driving shaft, wherein the driving motor is connected to the driving shaft through the transmission mechanism, and the driving shaft is connected to a wheel of the vehicle.

10. The battery swap type hybrid power vehicle according to claim 2, wherein the vehicle is further provided with a quick-swap device, one end of the quick-swap device is connected with a lower vehicle body of the vehicle, and the other end of the quick-swap device is connected with the basic battery or the quick-swap battery.
